# EUROPEAN PATENT SPECIFICATION

(11) **EP 1 886 908 B1**
(45) Date of publication and mention of the grant of the patent: **05.08.2009**
(21) Application number: 06016657.6
(22) Date of filing: 09.08.2006
(51) Int. Cl.: B62J 25/00

(54) **Footrest mechanism for a scooter-type motorcycle**
Fußstützenmechanismus für rollerartiges Motorrad
Mécanisme d'un repose-pied pour motocyclette du type scooter

(43) Date of publication of application: 13.02.2008
(73) Proprietor: Kwang Yang Motor Co., Ltd., Kaohsiung (TW)
(72) Inventor: Lin, Chien-Chen, Zuoying Dist., Kaohsiung Taiwan (TW)
(74) Representative: Köhler, Walter

(56) References cited:
- EP-A2- 1 088 750
- FR-A1- 2 748 714
- JP-A- 4 201 685
- JP-A- 4 218 476
- JP-A- 4 334 684
- JP-A- 5 201 372
- JP-A- 5 208 691

## Description

### 1. Field of the Invention

The present invention relates to a footrest mechanism for a scooter-type motorcycle, and more particularly to a footrest mechanism for a scooter-type motorcycle that is neat and less likely to rust.

### 2. Description of Related Art

Foot pegs are included on most scooter-type motorcycles that have a frame and a frame cover. The frame has an outside. The frame cover is mounted on the outside of the frame and has a mounting slot. The foot peg is attached to and protrudes out from the frame and extends through the mounting slot in the frame cover to provide a footrest for a passenger riding on the scooter-type motorcycle. However, the foot peg must have a uniform cross-section smaller than the mounting slot. Therefore, the foot peg is not large enough to securely and comfortably support a passenger's feet. JP 5208691, FR 2748714, JP 5201372, JP 4334684, JP 4218476, and JP 4201685 each discloses a conventional foot peg.

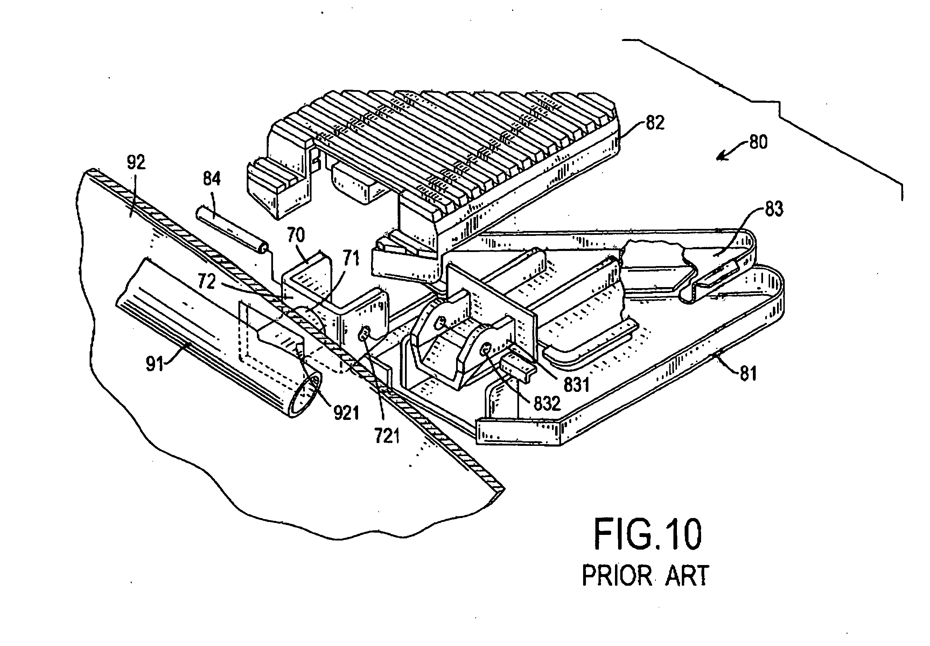

With reference to Fig. 10, a conventional footrest mechanism in accordance with the prior art was developed for a scooter-type motorcycle having a frame (91) and a frame cover (92) to overcome the foregoing problem.

The frame (91) has an outside.

The frame cover (92) is mounted on the outside of the frame (91) and has a sidewall and a mounting slot (921). The sidewall has an outside. The mounting slot (921) is formed through the sidewall of the frame cover (92).

The footrest mechanism is attached to the frame (91), protrudes through the mounting slot (921) and has a pivot bracket (70) and a footrest assembly (80).

The pivot bracket (70) has a shaft (71) and a stationary bracket (72). The shaft has a proximal end and a distal end. The proximal end of the shaft is attached securely to the frame (91) and may be welded to the frame (91) or screwed onto the frame (91). The distal end of the shaft extends out of the mounting slot (921). The stationary bracket (72) is U-shaped, is attached to and protrudes longitudinally from the distal end of the shaft (71) and has two wings and two pivot holes (721). The pivot holes (721) are formed respectively through the wings and align with each other.

The footrest assembly (80) is connected pivotally to the pivot bracket (70), is folded selectively against or extends out from the outside of the sidewall of the frame cover (92), is much larger than the mounting slot (921) in the sidewall of the frame cover (92) and has a base (83), a pivot pin (84), a bottom cover (81) and a footrest (82).

The base (83) is attached pivotally to the pivot bracket (70) and is larger than the mounting slot (921) in the sidewall of the frame cover (92) and has a proximal end, a top, a bottom, two arms (831) and two pivot holes (832).

The arms (831) are formed in parallel on and protrude from the proximal end of the base (83) and are pivotally mounted between the two wings of the stationary bracket (72) of the pivot bracket (70).

The pivot holes (832) of the base (83) are formed respectively through the arms (831), align with each other and align with the pivot holes (721) in the wings of the pivot bracket (70).

The pivot pin (84) is mounted through the pivot holes (721) in the wings of the pivot bracket (70) and the pivot holes (832) in the arms (831) of the base (83) to connect the base (83) pivotally to the pivot bracket (70).

The bottom cover (81) is attached to the bottom of the base (83) and has an outer edge and a skirt. The skirt is formed on and protrudes up from the outer edge of the bottom cover (81).

The footrest (82) is attached to the top of the base (83) and has an outer edge and a skirt. The skirt is formed on and protrudes down from the outer edge of the footrest (82), corresponds to the skirt on the bottom cover (81) and is connected to the skirt of the bottom cover (81) such that the footrest (82) and the bottom cover (81) are connected securely to each other around the base (83).

However, the footrest mechanism as described has the following disadvantages. For the footrest assembly (80) to be able to pivot against the outside of the sidewall of the frame cover (92), the pivot bracket (70) must protrude significantly out of the mounting slot (921). Consequently, almost the entire pivot bracket (70) is exposed outside the frame cover (92), causes the scooter-type motorcycle to be unsightly and is more likely to be splashed by water to rust and make the footrest assembly (80) hard to fold.

The primary objective of the present invention is to provide a footrest mechanism for a scooter-type motorcycle that is neat and is less likely to be splashed by water to reduce the chance of rusting. Further, a support peg of the footrest assembly allows large-area pedal assembly to be mounted on.

In Accordance with the present invention there is provided a footrest mechamism as set out in claim 1.

A footrest mechanism in accordance with the present invention for a scooter-type motorcycle with a frame having an outside comprises a frame cover and a pedal mechanism. The frame cover is mounted on the outside of the frame and has a sidewall having an outside, a footrest recess and a mounting slot The foot rest recess is formed in the outside of the sidewall of the frame cover and has a bottom and an opening opposite to the bottom and in the sidewall of the frame cover. The mounting slot is formed through the sidewall of the frame cover and is defined through the bottom of the footrest recess. The pivot bracket assembly has a distal end pivotally connected to a support peg of the footrest assembly, extending into and being held in the footrest recess though the mounting slot and kept from extending out of the opening of the footrest recess. The pivot bracket assembly is implemented with a pivot bracket being attached to the frame inside the mounting slot in the sidewall of the frame cover. The pivot bracket has a pivot rod formed on and protruding transversely from the pivot bracket, and the pivot rod has a distal end. The support peg further has a pivot hole formed transversely through the proximal end of the support peg and mounted rotatably around the pivot rod of the pivot bracket, the pivot bracket assembly further has a locking bolt, a spring and a latch. The locking bolt is mounted slidably in the pivot bracket and has a front end. The spring is mounted in the pivot bracket against the locking bolt. The latch is mounted pivotally on the pivot bracket and has a proximal end, a distal end and a hook. The hook is formed on the proximal end of the latch and abuts the locking bolt to selectively push the locking bolt.

The footrest assembly has a pivot bracket assembly, a support peg and a pedal assembly. The pivot bracket assembly is attached to the frame, is mounted inside the mounting slot in the sidewall of the frame cover and is hidden by the frame cover, such that the pivot bracket assembly is sheltered by the frame cover to avoid water splashing and prevent from rusting. Further, the pivot bracket assembly is hidden by the frame cover and does not disfigure an appearance of the scooter-type motorcycle.

The support peg is elongated and is mounted pivotally on the pivot bracket assembly, extends out of the mounting slot and selectively pivots between a retracted position and an extended position. Because the pivot bracket assembly is hidden inside the mounting slot in the sidewall of the frame cover, the support peg has to extend out of the mounting slot for mounting the pedal assembly.

The footrest device is selectively held in the footrest recess and is mounted on the support peg to pivots with the support peg to be selectively folded on the outside of the sidewall of the frame cover or extended to let a passenger step on. The footrest device can be larger than the mounting slot to have a large area to let the passenger securely and comfortably step on.

### IN THE DRAWINGS

Fig. 1 is a perspective view of a scooter-type motorcycle with a footrest mechanism in accordance with the present invention;
Fig. 2 is an exploded perspective view of the footrest mechanism in Fig. 1;
Fig. 3 is a perspective view of the footrest mechanism in Fig. 1;
Fig. 4 is a partially exploded perspective view of the footrest mechanism in Fig. 1;
Fig. 5 is a side view in partial section of the footrest mechanism in Fig. 1;
Fig. 6 is an operational side view in partial section of the footrest mechanism in Fig. 1 with an activation cable of the scooter-type motorcycle being pulled;
Fig. 7 is an operational side view in partial section of the footrest mechanism in Fig. 1 with a pedal assembly unfolded;
Fig. 8 is a top view in partial section of the footrest mechanism alone line 8-8 in Fig. 7;
Fig. 9 is a front view in partial section of the footrest mechanism in Fig. 1; and
Fig. 10 is an exploded perspective view of a conventional pedal assembly in accordance with the prior art mounted on a scooter-type motorcycle.

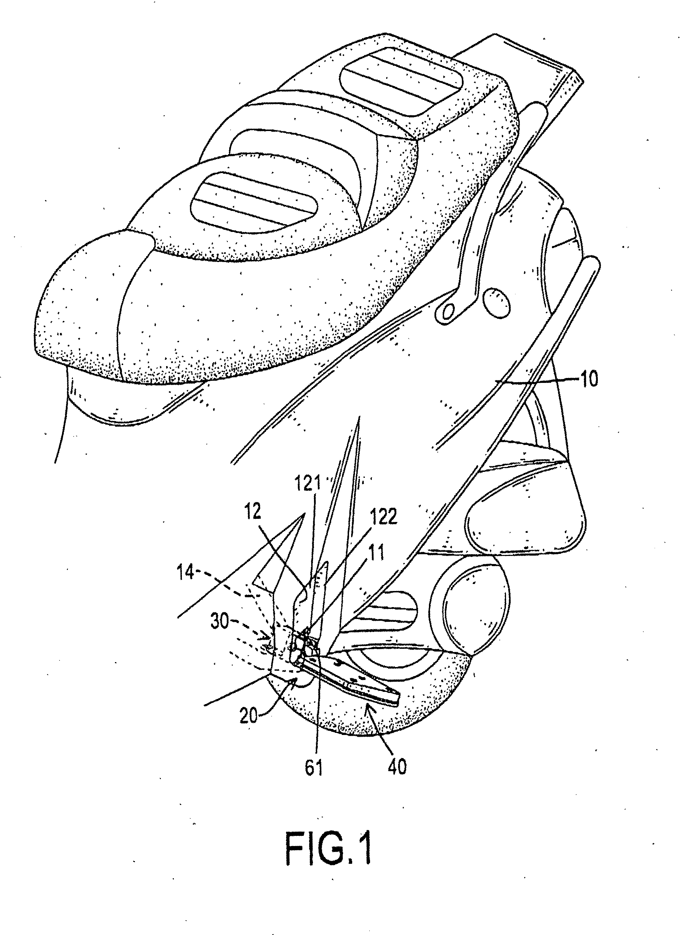

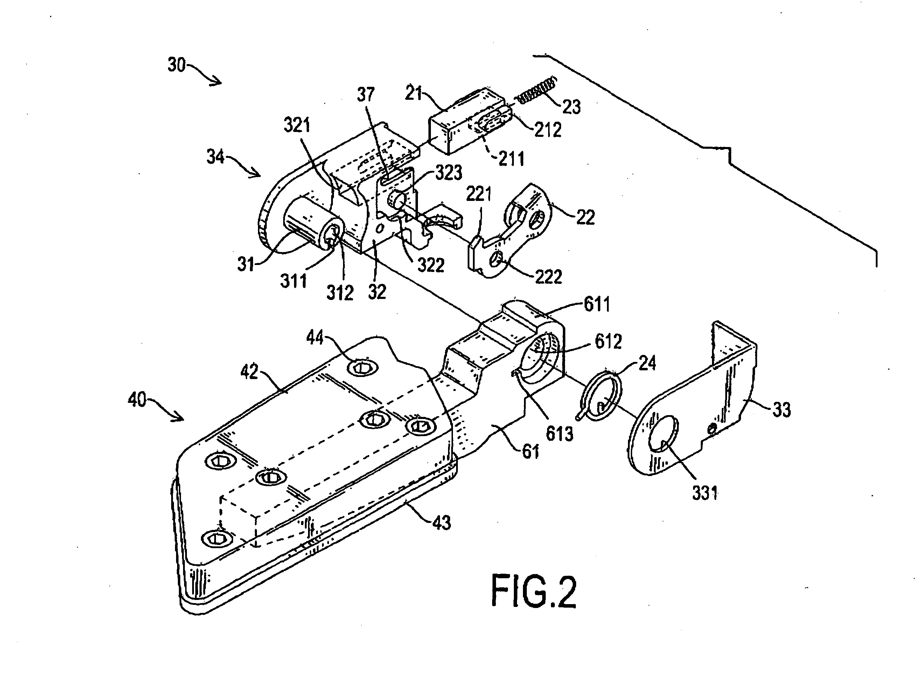

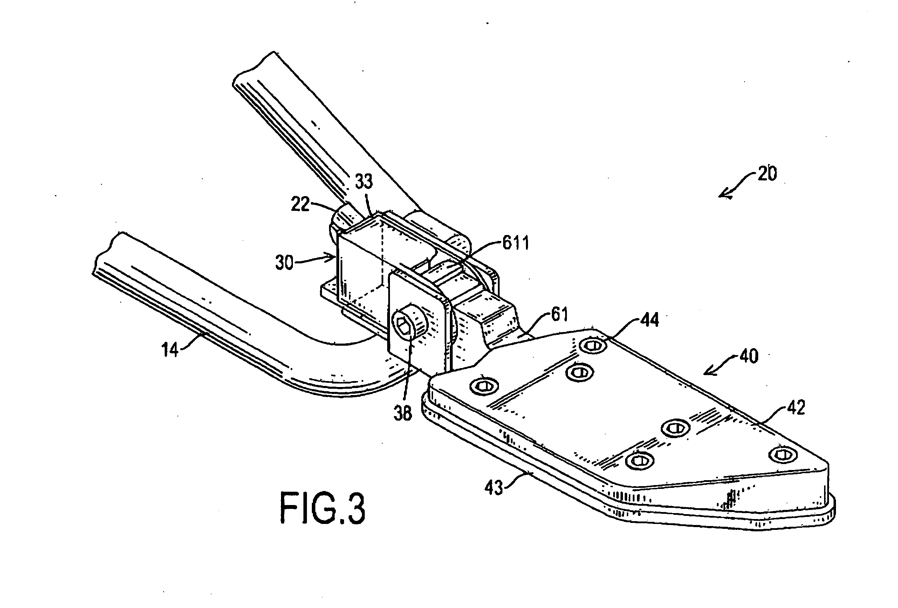

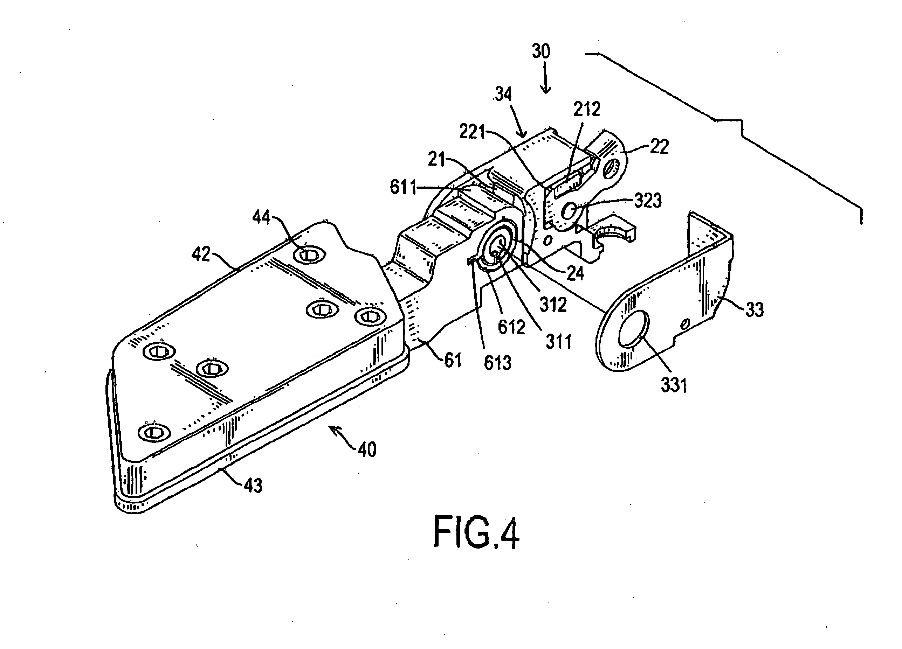

With reference to Figs. 1-5, a footrest mechanism in accordance with the present invention for a scooter-type motorcycle with a frame (14) comprises a frame cover (10), a footrest assembly (20) and an optional activation cable (51).

The frame (14) has an outside.

The frame cover (10) is mounted on the outside of the frame (14) and has a sidewall, a footrest recess (12) and a mounting slot (11). The sidewall of the frame cover (10) has an outside. The footrest recess (12) is formed in the outside of the sidewall of the frame cover (10) and has a bottom (121) and an opening (122). The mounting slot (11) is formed through the sidewall of the frame cover (10) under the footrest recess (12), is defined through the bottom (121) of the footrest recess (12) and may communicate with the footrest recess (12). The mounting slot (11) may be located at a lower end of the footrest recess (12). The opening (122) is opposite to the bottom (121) and in the sidewall of the frame cover (10).

The footrest assembly (20) is attached to the frame (14), protrudes through the mounting slot (11), selectively folds into the footrest recess (12) and has a pivot bracket assembly (30), a support peg (61) and a footrest device (40).

The pivot bracket assembly (30) is attached to the frame (14), is mounted in the mounting slot (11) in the sidewall of the frame cover (10), is hidden by the frame cover (10) to keep from distracting from the scooter-type motorcycle's appearance and may be implemented with a pivot bracket (34), a locking bolt (21), a spring (23), a latch (22) and an optional cover (33). The pivot bracket assembly (30) has a distal end extends through the mounting slot (11) and is kept from extending out of the opening (122) of the footrest recess (12).

The pivot bracket (34) is attached to the frame (14) inside the mounting slot (11) in the sidewall of the frame cover (10) and has a pivot rod (31) and an optional latch frame (32).

The pivot rod (31) is formed on and protrudes transversely from the pivot bracket (34) and has a distal end, an optional mounting notch (311) and an optional mounting hole (312). The mounting notch (311) is formed in the distal end of the pivot rod (31). The mounting hole (312) is formed coaxially through the pivot rod (31) and the pivot bracket (34).

The latch frame (32) is formed on and protrudes from the pivot bracket (34) at an interval from the pivot rod (31) and has a rear surface, a distal surface, a bolt hole (321), a mounting recess (322), a guide slot (37) and a pivot nipple (323). The bolt hole (321) is formed longitudinally through the latch frame (32). The mounting recess (322) is formed in the distal surface of the latch frame (32) and has a bottom. The guide slot (37) is formed longitudinally in the rear surface of the latch frame (32) and communicates with the bolt hole (321) and the mounting recess (322). The pivot nipple (323) is formed on and protrudes from the latch frame (32) near the bottom of the mounting recess (322).

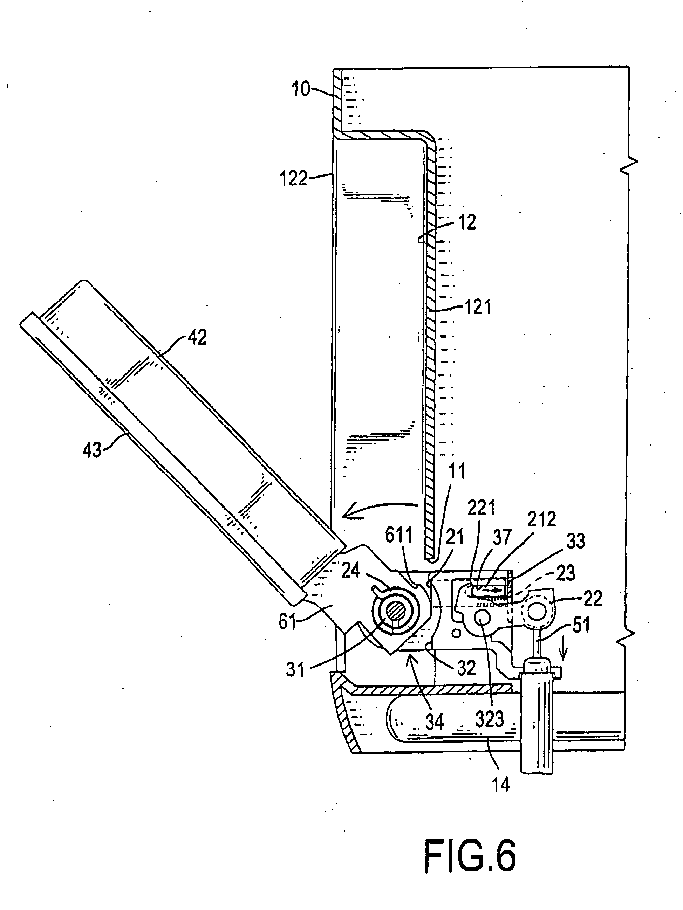

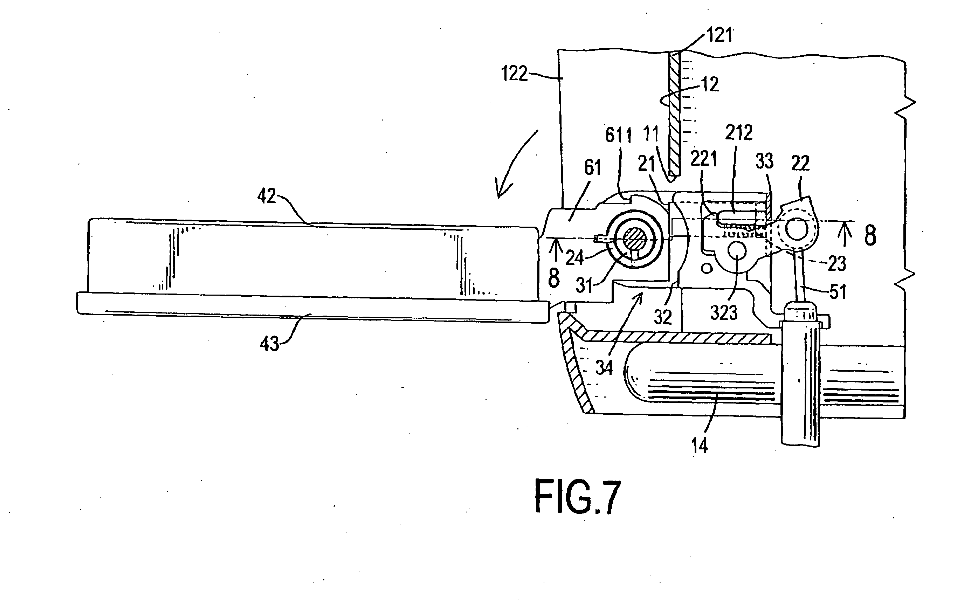

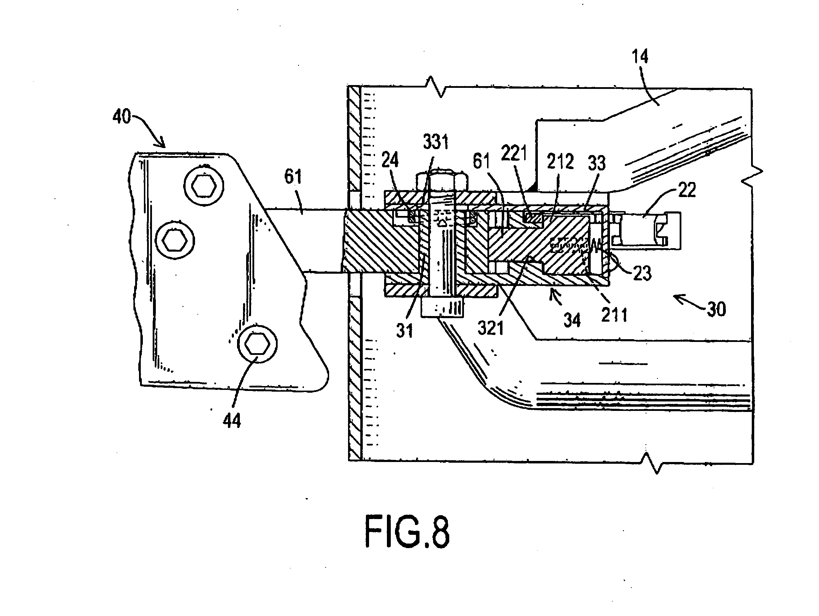

With further reference to Figs. 6-8, the locking bolt (21) is mounted slidably in the pivot bracket (34). The locking bolt (21) may be mounted slidably in the bolt hole (321) in the latch frame (32) and has a front end, an optional spring hole (211) and an optional stop (212). The front end of the locking bolt (21) selectively protrudes out of the bolt hole (321). The spring hole (211) is formed longitudinally in the locking bolt (21). The stop (212) is formed on and protrudes from the locking bolt (21) and extends into the mounting recess (322) through the guide slot (37).

The spring (23) is mounted in the pivot bracket (34) against the locking bolt (21), pushes the locking bolt (21) into the bolt hole (321) and is mounted in the spring hole (211) in the locking bolt (21).

The latch (22) is mounted pivotally on the pivot bracket (34), may be mounted in the mounting recess (322) in the latch frame (32) and has a proximal end, a distal end, an optional pivot hole (222) and a hook (221). The pivot hole (222) is formed through the latch (22) and is mounted rotatably around the pivot nipple (323) to mount the latch (22) pivotally in the mounting recess (322). The hook (221) is formed on the proximal end of the latch (22), abuts the locking bolt (21) to selectively push the locking bolt (21) and may abut the stop (212) of the locking bolt (21).

The cover (33) is mounted on the pivot rod (31), covers the rear surface and the distal surface of the latch frame (32) of the pivot bracket (34) to hold the locking bolt (21) and the spring (23) securely in the bolt hole (321) in the latch frame (32) and has an optional through hole (331) and an optional fastener (38). The through hole (331) is formed through the cover (33) and mounted around the pivot rod (31) of the pivot bracket (34). The fastener (38) is mounted through the mounting hole (312) in the pivot rod (31) and the through hole (331) in the cover (33) to attach the cover (33) securely to the pivot bracket (34).

The support peg (61) is elongated and has a top, a bottom, two opposite sides, a cross-section, a proximal end, a distal end, an optional pivot hole (612), an optional torsion spring (24) and an optional hook portion (611).

The cross-section of the support peg (61) is smaller than the mounting slot (11) in the sidewall of the frame cover (10).

The proximal end of the support peg (61) is connected pivotally to the distal end of the pivot bracket assembly (30) and selectively pivots between a retracted position and an extended position. To conveniently connect the support peg (61) without from the frame cover (10), the proximal end of the support peg (61) is connected pivotally to the pivot bracket assembly (30) before the frame cover (10) is attached to the outside of the frame (14).

The pivot hole (612) is formed transversely through the proximal end of the support peg (61), is mounted rotatably around the pivot rod (31) of the pivot bracket (34) to pivotally connect the proximal end of the support peg (61) to the pivot bracket assembly (30) and may have a small-diameter end, a large-diameter end and a mounting notch (613). The small-diameter end is mounted around the pivot rod (31). The large-diameter end has an inner wall. The mounting notch (613) is formed in the inner wall of the large-diameter end of the pivot hole (612).

The torsion spring (24) is mounted in the large-diameter end of the pivot hole (612) around the pivot rod (31) of the pivot bracket (34) and has two ends. The two ends of the torsion spring (24) may be mounted respectively in the mounting notch (311) in the pivot rod (31) and the mounting notch (613) in the pivot hole (612) of the support peg (61) to bias the support peg (61) toward the extended position.

The hook portion (611) is formed on the proximal end of the support peg (61) and selectively engages the front end of the locking bolt (21) to hold the support peg (61) in a retracted position.

The footrest device (40) may be larger than the mounting slot (11) in the sidewall of the frame cover (10), is mounted on and pivots with the support peg (61) outside the mounting slot (11) and selectively retracts against the outside of the sidewall of the frame cover (10) or extends to provide a passenger secure and comfortable supports for the passenger's feet. The footrest device (40) may correspond to and retract into the footrest recess (12) in the sidewall of the frame cover (10), is attached to the support peg (61), may be mounted detachably on the support peg (61) and may have a bottom cover (43), a footrest (42) and multiple optional fasteners (44),

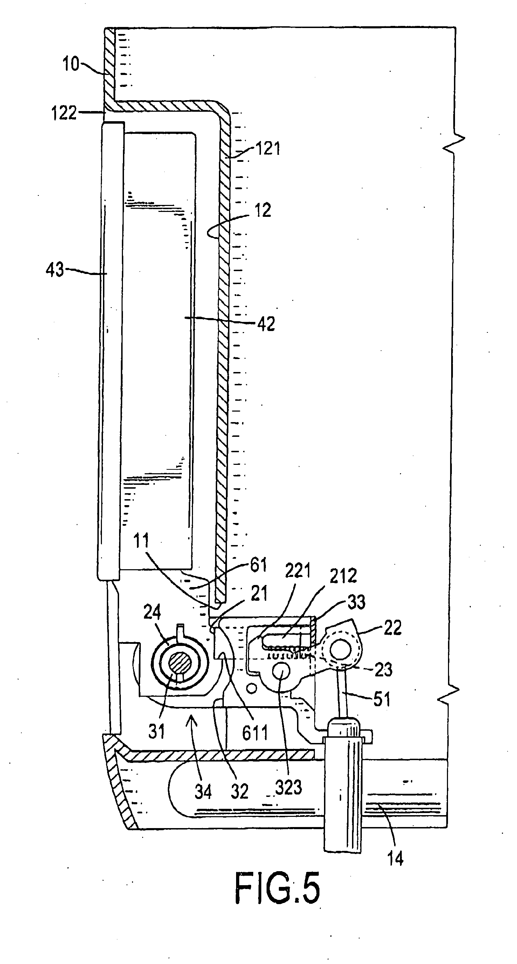

With further reference to Fig. 5, when the footrest device (40) is retracted into the footrest recess (12) in the sidewall of the frame cover (10), the footrest device (40) is flush with the frame cover (10) to give the scooter-type motorcycle a smooth and neat appearance.

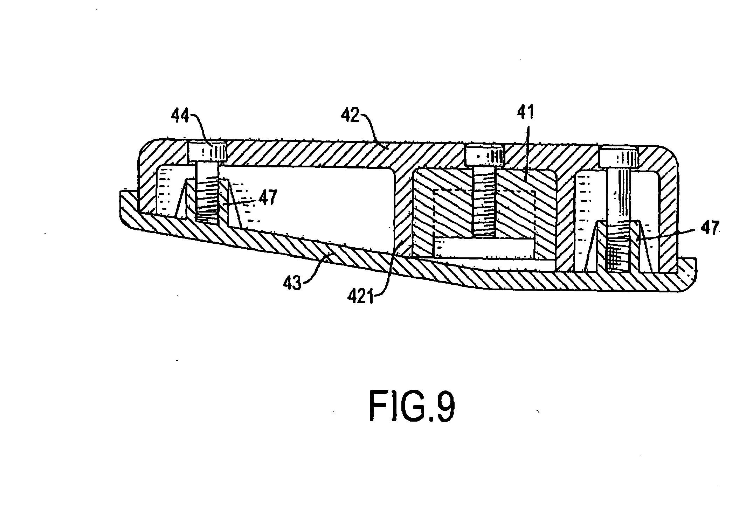

With further reference to Fig. 9, the bottom cover (43) is attached to the bottom of the support peg (61), may be larger than the mounting slot (11) and has a top and multiple optional connecting tubes (47). The connecting tubes (47) are formed on and protrude from the top of the bottom cover (43).

The footrest (42) corresponds to the bottom cover (43), is attached to the top of the support peg (61) and has a bottom, two optional ribs (421) and multiple optional connecting holes. The ribs (421) are formed on and protrude from the bottom of the footrest (42) and press respectively against opposite sides of the support peg (61), such that the footrest (42) can be securely attached to the top of the support peg (61). The connecting holes are formed through the footrest (42) and correspond respectively to the connecting tubes (47) on the bottom cover (43).

The fasteners (44) connect the footrest device (40) to the support peg (61), are mounted respectively through the connecting holes in the footrest (42) and are connected respectively to the connecting tubes (47) to attach the footrest (42) securely to the bottom cover (43).

The activation cable (51) is connected to and selectively releases the footrest assembly (20) and may be connected to the distal end of the latch (22). When the activation cable (51) is pulled, the latch (22) rotates, pushes the locking bolt (21) away from the support peg (61) and releases the hook portion (611) of the support peg (61) so the footrest device can pivot to the extended position. When the footrest device is pivoted to the extended position and the activation cable (51) is released, the locking bolt (21) is pushed by the spring (23) against the support peg (61).

The Invention as described has the following advantages. The pivot bracket assembly (30) is located inside the mounting slot (11) in the sidewall of the frame cover (10) and is encompassed by the sidewall of the frame cover around. Thus, the pivot bracket assembly (30) is hidden inside the mounting slot (11) in the sidewall of the frame cover (10) and does not disfigure the appearance of the scooter-type motorcycle. The pivot bracket assembly (30) is sheltered by the frame cover (10) so the pivot bracket assembly (30) is less likely to be splashed by water to keep the pivot bracket assembly (30) from rusting. Further, when the footrest device (40) is retracted into the footrest recess (12) in the sidewall of the frame cover (10), the footrest device (40) is flush with the frame cover (10) to give the scooter-type motorcycle a smooth and neat appearance.

## Claims

1. A footrest mechanism for a scooter-type motorcycle with a frame (14) having an outside, wherein the footrest mechanism comprises
a frame cover (10) being adapted to be mounted on the outside of the frame (14) and having
a sidewall having an outside; and
a mounting slot (11) being formed through the sidewall of the frame cover (10); and
a footrest recess (12) formed in the outside of the sidewall of the frame cover (10); and
a footrest assembly (20) being adapted to be attached to the frame (14), protruding through the mounting slot (11) and having
a pivot bracket assembly (30) being adapted to be attached to the frame (14) and being mounted in the mounting slot (11) in the sidewall of the frame cover (10);
a support peg (61) being elongated and having
a top;
a bottom;
two opposite sides;
a cross-section being smaller than the mounting slot (11) in the sidewall of the frame cover (10); and
a proximal end being connected pivotally to the pivot bracket assembly (30) between a retracted position and an extended position; and
a footrest device (40) being mounted on and pivoting with the support peg (61) outside the mounting slot (11) to be selectively retracted against the outside of the sidewall of the frame cover (10) or extended and selectively held in the footrest recess (12)
wherein
the footrest device (40) is larger than the mounting slot (11) in the sidewall of the frame cover (10);
the footrest recess (12) has a bottom (121) and an opening (122) opposite to the bottom (121) and in the sidewall of the frame cover (10)
the mounting slot (11) is formed through the bottom (121) of the footrest recess (12);
the pivot bracket assembly (30) has a distal end pivotally connected to the support peg (61), extending through the mounting slot (11) and kept from extending out of the opening (122) of the footrest recess (12);
the pivot bracket assembly (30) is implemented with a pivot bracket (34) being adapted to be attached to the frame (14) inside the mounting slot (11) in the sidewall of the frame cover (10) and having a pivot rod (31) formed on and protruding transversely from the pivot bracket (34) and having a distal end; and
the support peg (61) further has a pivot hole (612) formed transversely through the proximal end of the support peg (61) and mounted rotatably around the pivot rod (31) of the pivot bracket (34)
**characterized in that**
the pivot bracket assembly (30) further has
a locking bolt (21) mounted slidably in the pivot bracket (34) and having a front end;
a spring (23) mounted in the pivot bracket (34) against the locking bolt (21); and
a latch (22) mounted pivotally on the pivot bracket (34) and having
a proximal end
a distal end; and
a hook (221) formed on the proximal end of the latch (22) and abutting the locking bolt (21) to be adapted to selectively push the locking bolt (21).

2. The footrest mechanism as claimed in claim 1, wherein the footrest device (40) further has multiple fasteners (44) and is mounted detachably an the support peg (61); and
the fasteners (44) connect the footrest device (40) to the support peg (61).

3. The footrest mechanism as claimed in claim 1, wherein the mounting slot (11) is formed under the footrest recess (12).

4. The footrest mechanism as claimed in claim 1 further comprising an activation cable (51) being connected to the distal end of the latch (22) of the footrest assembly (20).

5. The footrest mechanism as claimed in claim 1, wherein the footrest device (40) further has
a bottom cover (43) attached to the bottom of the support peg (61) and being larger than the mounting slot (11); and
a footrest (42) corresponding to the bottom cover (43), attached to the top of the support peg (61) and having a bottom.

6. The footrest mechanism as claimed in claim 5, wherein the footrest (42) further has two ribs (421) formed on and protruding from the bottom of the footrest (42) and pressing respectively against the opposite sides of the support peg (61).

7. The footrest mechanism as claimed in claim 1, wherein the pivot bracket (34) further has a latch frame (32) formed on and protruding from the pivot bracket (34) at an interval from the pivot rod (31) and having
a rear surface;
a distal surface;
a bolt hole (321) formed longitudinally through the latch frame (32);
a mounting recess (322) formed in the distal surface of the latch frame (32) and having a bottom;
a guide slot (37) formed longitudinally in the rear surface of the latch frame (32) and communicating with the bolt hole (321) and the mounting recess (322); and
a pivot nipple (323) formed an and protruding from the latch frame (32) near the bottom of the mounting recess (322);
the pivot rod (31) of the pivot bracket (34) further has a mounting notch (311) formed in the distal end of the pivot rod (31);
the locking bolt (21) is mounted slidably in the bolt hole (321) in the latch frame (32) and has
a front end protruding out of the bolt hole (321);
a spring hole (211) formed longitudinally in the locking bolt (21); and
a stop (212) formed on and protruding from the locking bolt (21) and extending into the mounting recess (322) through the guide slot (37);
the spring (23) is mounted in the spring hole (211) in the locking bolt (21);
the latch (22) is mounted in the mounting recess (322) of the latch frame (32) and further has a pivot hole (222) formed through the latch (22) and mounted rotatably around the pivot nipple (323) to mount the latch (22) pivotally in the mounting recess (322);
the hook (221) of the latch (22) abuts the stop (212) of the locking bolt (21);
the pivot hole (612) of the support peg (61) has
a small-diameter end mounted around the pivot rod (31);
a large-diameter end having an inner wall; and
a mounting notch (613) formed in the inner wall of the large-diameter end of the pivot hole (612); and
the support peg (61) further has
a torsion spring (24) mounted in the large-diameter end of the pivot hole (612) around the pivot rod (31) of the pivot bracket (34) and having two ends mounted respectively in the mounting notch (311) in the pivot rod (31) and the mounting notch (613) in the pivot hole (612) of the support peg (61); and
a hook portion (611) formed on the proximal end of the support peg (61) and selectively engaging the front end of the locking bolt (21).

## Patentansprüche

1. Fußrastenmechanismus für ein rollerartiges Motorrad, das einen Rahmen (14) mit einer Außenseite aufweist, wobei der Fußrastenmechanismus umfasst:
eine Rahmenabdeckung (10), die dazu ausgelegt ist, an der Außenseite des Rahmens (14) angebracht zu werden, mit
einer Seitenwand, die eine Außenseite besitzt; und
einem Anbringungsschlitz (11), der durch die Seitenwand der Rahmenabdeckung (10) hindurch ausgebildet ist;
eine Fußrastenaussparung (12), die in der Außenseite der Seitenwand der Rahmenabdeckung (10) ausgebildet ist; und
eine Fußrastenanordnung (20), die dazu ausgelegt ist, am Rahmen (14) befestigt zu werden, und durch den Anbringungsschlitz (11) vorsteht, mit
einer Schwenkarmanordnung (30), die dazu ausgelegt ist, an dem Rahmen (14) befestigt zu werden, und in dem Anbringungsschlitz (11) in der Seitenwand der Rahmenabdeckung (10) angebracht ist; und
einem Tragzapfen (61), der lang gestreckt ist und besitzt:
eine Oberseite;
eine Unterseite;
zwei gegenüberliegende Seiten;
einen Querschnitt, der kleiner als der Anbringungsschlitz (11) in der Seitenwand der Rahmenabdeckung (10) ist; und
ein proximales Ende, das mit der Schwenkarmanordnung (30) zwischen einer zurückgezogenen Position und einer ausgefahrenen Position schwenkbar verbunden ist; und
einer Fußrastenvorrichtung (40), die an dem Tragzapfen (61) außerhalb des Anbringungsschlitzes (11) angebracht und schwenkbar ist, um wahlweise zur Außenseite der Seitenwand der Rahmenabdeckung (10) zurückgezogen oder ausgefahren und in der Fußrastenaussparung (12) wahlweise gehalten zu werden,
wobei
die Fußrastenvorrichtung (40) größer ist als der Anbringungsschlitz (11) in der Seitenwand der Rahmenabdeckung (10);
die Fußrastenaussparung (12) eine Unterseite (121) und eine Öffnung (122) gegenüber der Unterseite (121) und in der Seitenwand der Rahmenabdeckung (10) besitzt;
der Anbringungsschlitz (11) durch die Unterseite (121) der Fußrastenaussparung (12) hindurch ausgebildet ist;
die Schwenkarmanordnung (30) ein distales Ende besitzt, das mit dem Tragzapfen (61) schwenkbar verbunden ist, sich durch den Anbringungsschlitz (11) erstreckt und von einem Ausfahren aus der Öffnung (122) der Fußrastenaussparung (12) abgehalten wird;
die Schwenkarmanordnung (30) mit einem Schwenkarm (34) versehen ist, der dazu ausgelegt ist, am Rahmen (14) innerhalb des Anbringungsschlitzes (11) in der Seitenwand der Rahmenabdeckung (10) befestigt zu werden, und einen Schwenkstab (31) besitzt, der an dem Schwenkarm (34) ausgebildet ist, hiervon in Querrichtung vorsteht und ein distales Ende besitzt; und
der Tragzapfen (61) ferner ein Schwenkloch (612) besitzt, das quer durch das proximale Ende des Tragzapfens (61) hindurch ausgebildet ist und um den Schwenkstab (31) des Schwenkarms (34) drehbar angebracht ist,
**dadurch gekennzeichnet, dass**
die Schwenkarmanordnung (30) ferner umfasst:
einen Verriegelungsbolzen (21), der in dem Schwenkarm (34) gleitend angebracht ist und ein vorderes Ende besitzt;
eine Feder (23), die in dem Schwenkarm (34) angebracht ist und gegen den Verriegelungsbolzen (21) drückt; und
eine Klinke (22), die an dem Schwenkarm (34) schwenkbar angebracht ist, mit
einem proximalen Ende und
einem distalen Ende; und
einen Haken (221), der an dem proximalen Ende der Klinke (22) ausgebildet ist, an dem Verriegelungsbolzen (21) anliegt und dazu ausgelegt ist, den Verriegelungsbolzen (21) wahlweise zu schieben.

2. Fußrastenmechanismus nach Anspruch 1, wobei die Fußrastenvorrichtung (40) ferner mehrere Befestigungseinrichtungen (44) besitzt und an dem Tragzapfen (61) lösbar angebracht ist; und
die Befestigungseinrichtungen (44) die Fußrastenvorrichtung (40) mit dem Tragzapfen (61) verbinden.

3. Fußrastenmechanismus nach Anspruch 1, wobei der Anbringungsschlitz (11) unter der Fußrastenaussparung (12) ausgebildet ist.

4. Fußrastenmechanismus nach Anspruch 1, der ferner ein Aktivierungsseil (51) aufweist, das mit dem distalen Ende der Klinke (22) der Fußrastenanordnung (20) verbunden ist.

5. Fußrastenmechanismus nach Anspruch 1, wobei die Fußrastenvorrichtung (40) ferner besitzt:
eine Unterseitenabdeckung (43) die an der Unterseite des Tragzapfens (61) befestigt ist und größer als der Anbringungsschlitz (11) ist; und
eine Fußraste (42), die der Unterseitenabdeckung (43) entspricht, an der Oberseite des Tragzapfens (61) befestigt ist und eine Unterseite besitzt.

6. Fußrastenmechanismus nach Anspruch 5, wobei die Fußraste (42) ferner zwei Rippen (421) besitzt, die an der Unterseite der Fußraste (42) ausgebildet sind, hiervon vorstehen und gegen die jeweiligen gegenüberliegenden Seiten des Tragzapfens (61) drängen.

7. Fußrastenmechanismus nach Anspruch 1, wobei der Schwenkarm (34) ferner einen Klinkenrahmen (32) besitzt, der an dem Schwenkarm (34) in einem Abstand von dem Schwenkstab (31)
ausgebildet ist und hiervon vorsteht, mit
einer hinteren Oberfläche;
einer distalen Oberfläche;
einem Bolzenloch (321), das in Längsrichtung durch den Klinkenrahmen (32) ausgebildet ist;
einer Anbringungsaussparung (322), die in der distalen Oberfläche des Klinkenrahmens (32) ausgebildet ist und eine Unterseite besitzt;
einem Führungsschlitz (37), der in Längsrichtung in der hinteren Oberfläche des Klinkenrahmens (32) ausgebildet ist und mit dem Bolzenloch (321) sowie mit der Anbringungsaussparung (322) in Verbindung steht; und
einem Schwenknippel (323), der an dem Klinkenrahmen (32) in der Nähe der Unterseite der Anbringungsaussparung (322) ausgebildet ist und hiervon vorsteht;
wobei der Schwenkstab (31) des Schwenkarms (34) ferner eine Anbringungsnut (311) besitzt, die im distalen Ende des Schwenkstabs (31) ausgebildet ist;
der Verriegelungsbolzen (21) in dem Bolzenloch (321) in dem Klinkenrahmen (32) gleitend angebracht ist und versehen ist mit
einem vorderen Ende, das aus dem Bolzenloch (321) vorsteht;
einem Federloch (211), das in Längsrichtung in dem Verriegelungsbolzen (321) ausgebildet ist; und
einem Anschlag (212), der an dem Verriegelungsbolzen (21) ausgebildet ist, hiervon vorsteht und sich durch den Führungsschlitz (37) in die Anbringungsaussparung (322) erstreckt;
die Feder (23) in dem Federloch (211) im Verriegelungsbolzen (21) angebracht ist;
die Klinke (22) in der Anbringungsaussparung (322) des Klinkenrahmens (32) angebracht ist und ferner ein Schwenkloch (222) besitzt, das durch die Klinke (22) ausgebildet ist und um den Schwenknippel (323) drehbar angebracht ist, um die Klinke (22) in der Anbringungsaussparung (322) schwenkbar anzubringen;
der Haken (221) der Klinke (22) an dem Anschlag (212) des Verriegelungsbolzens (21) anliegt;
das Schwenkloch (612) des Tragzapfens (61) versehen ist mit
einem Ende mit kleinem Durchmesser, das um den Schwenkstab (31) angebracht ist;
einem Ende mit großem Durchmesser, das eine Innenwand besitzt; und
einer Anbringungsnut (613), die in der Innenwand des Endes mit großem Durchmesser des Schwenklochs (612) ausgebildet ist; und der Tragzapfen (61) ferner versehen ist mit
einer Torsionsfeder (24), die in dem Ende mit großem Durchmesser des Schwenklochs (612) um den Schwenkstab (31) des Schwenkarms (34) angebracht ist und zwei Enden besitzt, die in der Anbringungsnut (311) in dem Schwenkstab (31) bzw. in der Anbringungsnut (613) in dem Schwenkloch (612) des Tragzapfens (61) angebracht sind; und
einem Hakenabschnitt (611), der am proximalen Ende des Tragzapfens (61) ausgebildet ist und wahlweise mit dem vorderen Ende des Verriegelungsbolzens (61) in Eingriff gelangt.

## Revendications

1. Mécanisme de repose-pieds pour une motocyclette de type scooter avec un cadre (14) comportant une partie extérieure, le mécanisme de repose-pieds comprenant
un couvercle de cadre (10) adapté pour être monté sur la partie extérieure du cadre (14) et ayant
une paroi latérale présentant une partie extérieure ; et
une fente de montage (11) formée à travers la paroi latérale du couvercle de cadre (10) ; et
un évidement repose-pieds (12) formé dans la partie extérieure de la paroi latérale du couvercle de cadre (10) ; et
un ensemble repose-pieds (20) adapté pour être fixé au cadre (14), en saillie à travers la fente de montage (11) et comportant
un ensemble de support pivot (30) adapté pour être fixé au cadre (14) et monté dans la fente de montage (11) dans la paroi latérale du couvercle de cadre (10) ;
un taquet de support (61) allongé et comportant
une partie supérieure ;
une partie inférieure ;
deux côtés opposés ;
une section transversale plus petite que la fente de montage (11) dans la paroi latérale du couvercle de cadre (10) ; et
une extrémité proximale raccordée par pivotement à l'ensemble de support pivot (30) entre une position rétractée et une position étendue ; et
un dispositif repose-pieds (40) monté sur le taquet de support (61) et pivotant avec celui-ci à l'extérieur de la fente de montage (11) pour être sélectivement rétracté contre la partie extérieure de la paroi latérale du couvercle de cadre (10) ou étendu et sélectivement maintenu dans l'évidement repose-pieds (12) dans lequel
le dispositif repose-pieds (40) est plus grand que la fente de montage (11) dans la paroi latérale du couvercle de cadre (10) ;
l'évidement repose-pieds (12) présente une base (121) et une ouverture (122) opposée à la base (121) et dans la paroi latérale du couvercle de cadre (10) ;
la fente de montage (11) est formée à travers la base (121) de l'évidement repose-pieds (12) ;
l'ensemble de support pivot (30) comporte une extrémité distale raccordée avec pivotement au taquet de support (61), s'étendant à travers la fente de montage (11) et ne pouvant pas s'étendre hors de l'ouverture (122) de l'évidement repose-pieds (12) ;
l'ensemble de support pivot (30) est mis en oeuvre avec un support pivot (34) adapté pour être fixé au cadre (14) à l'intérieur de la fente de montage (11) dans la paroi latérale du couvercle de cadre (10) et comportant une tige de pivot (31) formée sur le support pivot (34) et en saillie transversale à partir de celui-ci et comportant une extrémité distale ; et
le taquet de support (61) comprend en outre un trou de pivot (612) formé transversalement à travers l'extrémité proximale du taquet de support (61) et monté de manière rotative autour de la tige de pivot (31) du support pivot (34)
**caractérisé en ce que**
l'ensemble de support pivot (30) comprend en outre
un boulon d'arrêt (21) monté de manière coulissante dans le support pivot (34) et présentant une extrémité avant ;
un ressort (23) monté dans le support pivot (34) contre le boulon d'arrêt (21) ; et
un verrou (22) monté de manière pivotante dans le support pivot (34) et comportant
une extrémité proximale ;
une extrémité distale ; et
un crochet (221) formé sur l'extrémité proximale du verrou (22) et butant contre le boulon d'arrêt (21) pour être adapté afin de pousser sélectivement le boulon d'arrêt (21).

2. Mécanisme de repose-pieds selon la revendication 1, dans lequel le dispositif de repose-pieds (40) comprend en outre de multiples fixations (44) et est monté de manière amovible sur le taquet de support (61) ; et les fixations (44) raccordent le dispositif de repose-pieds (40) au taquet de support (61).

3. Mécanisme de repose-pieds selon la revendication 1, dans lequel la fente de montage (11) est formée sous l'évidement repose-pieds (12).

4. Mécanisme de repose-pieds selon la revendication 1, comprenant en outre un câble d'activation (51) relié à l'extrémité distale du verrou (22) de l'ensemble repose-pieds (20).

5. Mécanisme de repose-pieds selon la revendication 1, dans lequel le dispositif de repose-pieds (40) comprend en outre
un couvercle inférieur (43) fixé à la base du taquet de support (61) et plus grand que la fente de montage (11) ; et un repose-pieds (42) correspondant au couvercle inférieur (43), fixé à la partie supérieure du taquet de support (61) et comportant une base.

6. Mécanisme de repose-pieds selon la revendication 5, dans lequel le repose-pieds (42) comprend en outre deux nervures (421) formées sur la base du repose-pieds (42) et en saillie à partir de celle-ci et appuyant respectivement contre les côtés opposés du taquet de support (61).

7. Mécanisme de repose-pieds selon la revendication 1, dans lequel le support pivot (34) comprend en outre un cadre de verrou (32) formé sur le support pivot (34) et en saillie à partir de celui-ci à un intervalle de la tige de pivot (31) et comportant
une surface arrière ;
une surface distale ;
un trou de boulon (321) formé longitudinalement à travers le cadre de
verrou (32) ;
un évidement de montage (322) formé dans la surface distale du cadre de verrou (32) et comportant une base ;
une fente de guidage (37) formée longitudinalement dans la surface arrière du cadre de verrou (32) et communiquant avec le trou de boulon (321) et l'évidement de montage (322) ; et
un mamelon de pivot (323) formé sur le cadre de verrou (32) et en saillie à partir de celui-ci à proximité de la base de l'évidement de montage (322) ;
la tige de pivot (31) du support pivot (34) comprend en outre une encoche de montage (311) formée dans l'extrémité distale de la tige de pivot (31) ;
le boulon d'arrêt (21) est monté de manière coulissante dans le trou de boulon (321) dans le cadre de verrou (32) et comporte
une extrémité avant en saillie hors du trou de boulon (321) ; un trou de ressort (211) formé longitudinalement dans le boulon d'arrêt (21) ; et
une butée (212) formée sur le boulon d'arrêt (21) et en saillie à partir de celui-ci, et s'étendant dans l'évidement de montage (322) à travers la fente de guidage (37) ;
le ressort (23) est monté dans le trou de ressort (211) dans le boulon d'arrêt (21) ;
le verrou (22) est monté dans l'évidement de montage (322) du cadre de verrou (32) et présente en outre un trou de pivot (222) formé à travers le verrou (22) et monté de manière rotative autour du mamelon de pivot (323) pour monter le verrou (22) de façon pivotante dans l'évidement de montage (322) ;
le crochet (221) du verrou (22) bute contre la butée (212) du boulon d'arrêt (21) ;
le trou de pivot (612) du taquet de support (61) comporte une extrémité de petit diamètre montée autour de la tige de pivot
(31) ;
une extrémité de grand diamètre comportant une paroi interne ; et
une encoche de montage (613) formée dans la paroi interne de l'extrémité de grand diamètre du trou de pivot (612) ; et
le taquet de support (61) comprend en outre
un ressort de torsion (24) monté dans l'extrémité de grand diamètre du trou de pivot (612) autour de la tige de pivot (31) du support pivot (34) et comportant deux extrémités montées respectivement dans l'encoche de montage (311), dans la tige de pivot (31) et l'encoche de montage (613) dans le trou de pivot (612) du taquet de support (61) ; et
une partie de crochet (611) formée sur l'extrémité proximale du taquet de support (61) et venant sélectivement en prise avec l'extrémité avant du boulon d'arrêt (21).
